# EUROPÄISCHE PATENTSCHRIFT

(11) **EP 0 874 213 B1**
(45) Veröffentlichungstag und Bekanntmachung des Hinweises auf die Patenterteilung: **03.03.2004**
(21) Anmeldenummer: 98107364.6
(22) Anmeldetag: 22.04.1998
(51) Int. Cl.: G01B 5/28, G01B 7/34, G01B 21/30

(54) **Messsystem zur Beurteilung der Oberflächenqualität**
Measuring system for judging the surface quality
Système de mesure pour juger la qualité d'une surface

(30) Priorität: 25.04.1997 DE 19717593
(43) Veröffentlichungstag der Anmeldung: 28.10.1998
(73) Patentinhaber: Dürr Systems GmbH, 70435 Stuttgart (DE)
(72) Erfinder: Grau, Reinhold, Dr., 74321 Bietigheim-Bissingen (DE); Zabel, Michael, 71364 Winnenden (DE); Trautwein, Herbert, 71737 Kirchberg/Murr (DE); Meyer, Klaus, 71696 Möglingen (DE); Lorenz, Bernd, 74357 Bönnigheim (DE)
(74) Vertreter: Heusler, Wolfgang, Dipl.-Ing.

(56) Entgegenhaltungen:
- EP-A- 0 271 646
- EP-A- 0 313 801
- EP-A- 0 790 482
- WO-A-98/02850
- DE-A- 4 004 237
- DE-A- 4 420 293
- US-A- 5 387 061
- PATENT ABSTRACTS OF JAPAN vol. 095, no. 002, 31. März 1995 & JP 06 307840 A (NIPPON STEEL CORP), 4. November 1994
- PATENT ABSTRACTS OF JAPAN vol. 017, no. 509 (P-1612), 13. September 1993 & JP 05 133729 A (HAMAMATSU PHOTONICS KK), 28. Mai 1993
- PATENT ABSTRACTS OF JAPAN vol. 098, no. 002, 30. Januar 1998 & JP 09 280834 A (RICOH CO LTD), 31. Oktober 1997

## Beschreibung

Die Erfindung betrifft ein Meßsystem zur Beurteilung der Oberflächenqualität von serienweise automatisch beschichteten Werkstücken gemäß dem Oberbegriff der unabhängigen Patentansprüche.

Zur objektiven Beurteilung der erzielten Qualität bei der automatischen Beschichtung von Oberflächen insbesondere in der Automobilindustrie ist es derzeit üblich, die interessierenden Qualitätsparameter wie Welligkeitsverlauf, lokale Defekte, Lackglanz, Farbton und Schichtdicke stichprobenweise von Hand mit verschiedenen Labormeßgeräten zu messen. Zur Messung des Oberflächenverlaufs (Welligkeit oder Rauhigkeit) haben sich Handmeßgeräte bewährt, die manuell über eine für die Messung erforderliche Meßstrecke von z. B. 12 cm über die beschichtete Oberfläche bewegt werden, und zwar mittels an der Unterseite des Meßgerätes angebrachter Räder zur Einhaltung eines gleichbleibenden Abstands des Meßgerätes von der Oberfläche. Mit den auf der beschichteten Oberfläche rollenden Rädern ist ein Inkremental-Impulsgeber gekoppelt, mit dessen Signalen das Meßgerät den jeweils zurückgelegten Weg berechnet, was u.a. deshalb notwendig ist, weil die Messung in gleichmäßigen Wegabschnitten durchgeführt wird (Abtastung z.B. alle 0,2 mm). Derartige Verlaufmeßgeräte mit Inkremental-Gebereingang, die im wesentlichen (ohne Räder) für die vorliegende Erfindung verwendbar sind, sind an sich bekannt und im Handel erhältlich ("wave-scan plus" der Firma BYK-Gardner GmbH, 82534 Geretsried).

Ein entscheidender Vorteil der Handmeßgeräte ist ihre Genauigkeit und die Tatsache, daß bei allen Meßparametern die Qualität einer lackierten Oberfläche ähnlich beurteilt werden kann wie durch das (beim Kauf der lackierten Gegenstände entscheidende) menschliche Auge. Andererseits besteht bei unsachgemäßem Führen eines Meßgerätes, das die Oberfäche mit Rädern berührt, die Gefahr von Beschädigungen der aufgetragenen Schicht. Ferner ist generell nachteilig, daß wegen der unvermeidbaren Verzögerungen zwischen Messung vor Ort und Auswertung kein schneller Eingriff in den Beschichtungsprozeß zur Behebung ermittelter Fehler möglich ist. Außerdem können sich bei der Rückkopplung auf den Beschichtungsprozeß Fehler ergeben, weil durch die stichprobenweise Erfassung der Qualitätsparameter ein gesicherter Rückfluß oft schwierig ist und nur von sehr erfahrenem Anlagenpersonal umgesetzt werden kann. Besonders die oft schlechte Reproduzierbarkeit der vor Ort manuell erhaltenen Meßwerte aufgrund von Meßpunktabweichungen läßt Rückschlüsse auf den Beschichtungsprozeß nur bedingt zu. Der Mangel an Messungen kann nur unvollkommen durch mathematische Rechenmodelle umgangen werden. Schwierig ist auch für alle Qualitätsparameter die Festlegung von Toleranzen zwischen Labor- und Produktionsqualität. Meistens wird das in einer Produktionslinie meßtechnisch oder visuell bestimmte Qualitätsniveau mit einem im Labormaßstab unter Idealbedingungen erstellten Standard verglichen. Die prozeßbedingten Toleranzgrenzen zwischen Produktion und Labor werden aber bei der Erstellung des Standards nur unvollkommen berücksichtigt. Bisher war es deshalb nicht möglich, bei der Festlegung von Toleranzen die Qualitätsdifferenz zwischen Produktion und Labor ausreichend zu berücksichtigen.

Es sind auch schon berührungslos arbeitende automatisierte Online-Meßsysteme zur objektiven Beurteilung der Oberflächenqualität z.B. von Kraftfahrzeugkarosserieteilen oder kompletten Karossen bekannt, mit denen gemessene Fehler schon während des Produktionsprozesses zum Verhindern von Ausschuß berücksichtigt werden können. Die bekannten Online-Meßsysteme arbeiten mit ortsfest an einem Meßportal angeordneten oder von Robotern geführten Kameras, die mit definierten Winkeln auf die zu diesem Zweck beleuchtete Oberfläche gerichtet werden (JOT 1986/10 S. 44-48; JOT 1997/3, S. 72-73). Diese Meßsysteme genügen aber nicht den Anforderungen der Praxis an Genauigkeit und produktionsgerechte Automatisierung in einer Produktionslinie. Insbesondere können sie keine genormten Meßgrößen liefern, wie sie z.B. von der Automobilindustrie verlangt werden. Sie erlauben keine Vermessung aller unter Umständen kritischer Karosseriebereiche und im übrigen auch keine Messung von Qualitätsparametern wie Schichtdicke und Farbton.

Ferner ist aus EP 0 313 801 eine Anlage zur Vermessung der Außenkontur dreidimensionaler Objekte bekannt. Hierbei wird ein Laser-Entfernungsmesser von einem Roboter um das zu vermessende Objekt geführt, wobei der Laser-Entfernungsmesser jeweils die Entfernung zu der Oberfläche des dreidimensionalen Objektes misst. Auf diese Weise lässt sich automatisch ein numerisches Modell der Außenkontur des dreidimensionalen Objektes erstellen.

Der Erfindung liegt die Aufgabe zugrunde, ein Meßsystem anzugeben, das eine im wesentlichen vollautomatische objektive Online-Messung der für die Beurteilung der Beschichtungsqualität relevanten Parameter, insbesondere eine berührungslose Verlaufmessung, unter Verwendung an sich bekannter und bewährter Handmeßgeräte gestattet.

Diese Aufgabe wird durch die in den Patentansprüchen angegebenen Merkmale gelöst.

Gemäß der Erfindung werden zur Ermöglichung einer berührungslosen Verlaufmessung die für diese Messung notwendigen, bisher von den Führungsrädern des bekannten manuellen Verlaufmeßgerätes erzeugten Wegsignale extern simuliert, und zwar durch Ableitung aus den von der Steuerung des Bewegungsautomaten erzeugten Signalen. Der als Meßmaschine dienende Bewegungsautomat kann beispielsweise ein mindestens 6-achsiger Roboter eines in Beschichtungsanlagen prinzipiell bekannten Typs sein.

Durch die Erfindung werden die wichtigen Vorteile der an sich bewährten manuellen Verlaufmeßgeräte und sonstigen Handmeßgeräte sinnvoll vereinigt mit dem Erfordernis einer Online-Messung und somit der Möglichkeit, schon während des Produktionsprozesses nach Art eines Frühwarnsystems Beschichtungsfehler zu erkennen und vorzugsweise selbsttätig im geschlossenen Regelkreis zu korrigieren, um Ausschuß zu verhindern und ständige Qualitätsverbesserungen zu erreichen. Wichtige Vorteile der Erfindung sind demgemäß genormte Meßgrößen, flexible und weitgehend uneingeschränkte Wählbarkeit der Meßpunkte, insbesondere an Kraftfahrzeugkarossen, Flexibilität bei der Auswahl der Meßverfahren und einfache Auswechselbarkeit der Meßgeräte, problemlose Anbindung an vorhandene Beschichtungssteuersysteme sowie Reproduzierbarkeit des Meßvorgangs. Darüber hinaus wird dem Prüfpersonal ein Hilfsmittel zur schnelleren und besseren Bewältigung der Aufgaben zur Verfügung gestellt, wenn zusätzlich zu dem automatischen Meßprozeß auch eine visuelle Beurteilung (beispielsweise durch einen erfahrenen Koloristen) gewünscht wird.

Am Beispiel eines Meßroboters für Kraftfahrzeugkarossen wird die Erfindung im folgenden näher erläutert.

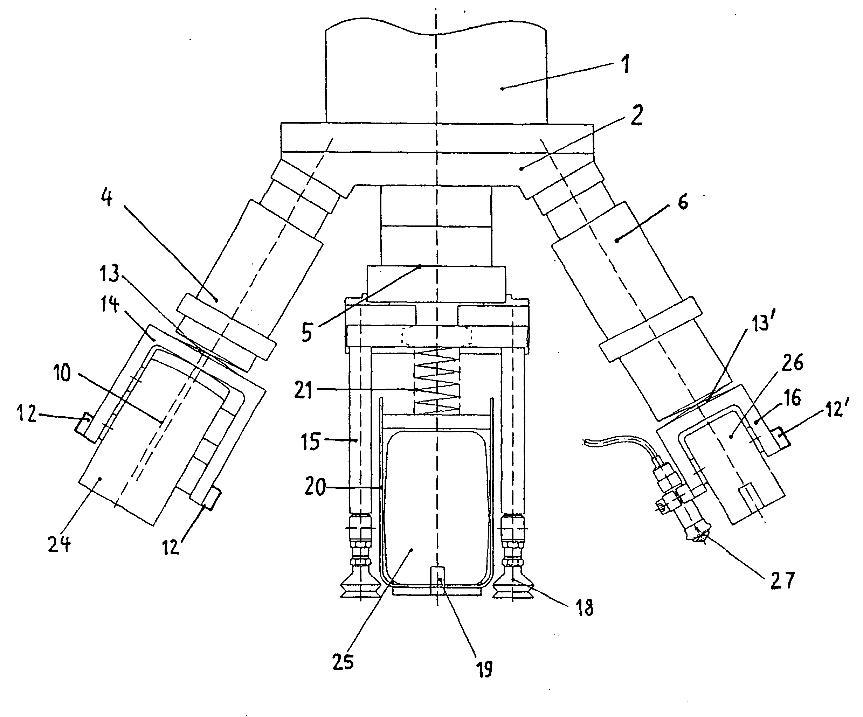

In der Zeichnung ist ein mehrachsig (z.B. 6 oder mehr Achsen) bewegbarer Arm 1 des Roboters dargestellt, an dem ein Basisteil 2 einer Aufnahmekonstruktion für Meßgeräte befestigt ist. Von dem Basisteil 2 stehen bei dem dargestellten Beispiel drei in verschiedene Richtungen weisende Aufnahmearme 4, 5 bzw. 6 ab, an deren Ende je eine Aufnahmeeinrichtung 14, 15 bzw. 16 für jeweilige Meßgeräte angeordnet ist. Die Aufnahmearme können bei Bedarf längs ihrer Längsachse teleskopartig aus- und einfahrbar ausgebildet sein.

In der Aufnahmeeinrichtung 14 ist ein Verlaufmeßgerät 24 angeordnet, das zur an sich bekannten Messung des welligen Schichtverlaufs (Helligkeitsmuster) der zu prüfenden Oberfläche von dem Roboter berührungslos in einem vorbestimmten gleichbleibenden Abstand von z. B. 3-4 mm über vorbestimmte Meßstrecken von z. B. jeweils 12 cm über die bei Kraftfahrzeugkarossen in der Regel gekrümmte Oberfläche bewegt werden soll. Die Längsachse 10 des Meßgerätes 24 soll hierbei stets genau senkrecht auf der beschichteten Oberfläche stehen.

Während bei der Beschichtung von Karossen mit Lackierrobotern normalerweise mechanische oder optische Systeme zur Erfassung der Karossenposition erforderlich sind, damit eine räumliche Beziehung zwischen Karosse und Roboter hergestellt werden kann, soll das hier beschriebene Meßsystem ohne eine derartige Positionserfassung auskommen, bei der es schwierig wäre, die nötigen engen Toleranzen von wenigen mm für die Positionierung der Meßgeräte einzuhalten. Stattdessen sind an der Aufnahmeeinrichtung 14 mindestens drei um die Längsachse 10 verteilte hochpräzise Abstandssensoren 12 angebracht, die bei Annäherung an die beschichtete Oberfläche bereits im Abstand 80-100 mm die Oberfläche erkennen und ständig dem jeweiligen Abstand entsprechende Signale an die Robotersteuerung liefern. Die Steuerung vergleicht die Abstandswerte der drei Sensoren 12 miteinander und steuert aufgrund des Vergleichsergebnisses den Roboter so, daß die Längsachse 10 des Meßgerätes 24 senkrecht zu der Oberfläche ausgerichtet wird und das Meßgerät diese Lage während der Abtastung der vorbestimmten Meßstrecke beibehält. Zugleich sorgt die Robotersteuerung aufgrund der von den Sensoren 12 gelieferten Abstandswerte für die Einstellung und Beibehaltung des vorbestimmten Abstands von der Oberfläche während der Abtastbewegung.

Zum Schutz gegen Beschädigungen bei etwaigem ungewollten Berühren der Karosse ist die Aufnahmeeinrichtung 14 mit dem Aufnahmearm 4 durch eine sphärische federnde Lagerung 13 verbunden.

Wie schon erwähnt wurde, benötigt das Verlaufmeßgerät 24 dem von ihm längs der Oberfläche jeweils zurückgelegten Weg entsprechende Impulsgebersignale, die bei der bisherigen manuellen Meßmethode von den auf der Oberfläche rollenden Rädern des Meßgerätes erzeugt wurden. Bei dem hier beschriebenen Meßsystem werden die Impulsgebersignale stattdessen von einem Mikroprozessor erzeugt und an den Inkrementaleingang des Meßgerätes angelegt, wobei der Mikroprozessor als Inkrementalgeberemulator ein von der Robotersteuerung geliefertes geschwindigkeitsproportionales Signal in das entsprechende geschwindigkeitsproportionale Impulsgebersignal umwandelt. Bei der berührungslosen Abtastbewegung verhält sich dadurch das Meßgerät selbst wie bei der konventionellen manuellen Messung mit Oberflächenberührung.

In der in der Zeichnung mittleren Aufnahmeeinrichtung 15 ist ein anderes Meßgerät angeordnet, nämlich ein Farbtonmeßgerät 25, von dem angenommen sei, daß es zur Messung auf die beschichtete Oberfläche aufgesetzt werden muß. Die Aufnahmeeinrichtung 15 ist daher mit vorzugsweise drei um die Längsachse des Gerätes 25 verteilten Vakuumsaugfüßen 18 versehen, die von dem Roboterarm 1 auf die beschichtete Oberfläche aufgesetzt werden, wobei sie die Aufnahmeeinrichtung 15 aufgrund einer zweckmäßigen Lagerung der Aufnahmeeinrichtung und/oder der Saugfüße selbsttätig in die gewünschte Stellung bringen können. Da der Roboter das Meßgerät zunächst mit hoher Geschwindigkeit an die Karosse heranfährt, ist an der Aufnahmeeinrichtung 15 ein Abstandssensor 19 angeordnet, der bei Annäherung bis zu einem bestimmten Abstand von z. B. wenigen cm ein Signal erzeugt, durch das die Roboterbewegung auf eine geringere Annäherungsgeschwindigkeit umgeschaltet wird. Beim Aufsetzen saugen sich die Saugfüße 8 an der Oberfläche fest, wodurch die Aufnahmeeinrichtung 15 fixiert wird. Die Aufnahmeeinrichtung enthält ferner eine Greifeinrichtung 20, die das Meßgerät 25 innerhalb der Aufnahmeeinrichtung festhält, solange diese nicht an der Oberfläche befestigt ist. Das Meßgerät 25 ist federnd gelagert, und nach dem Ansaugen wird die Greifeinrichtung 20 geöffnet, worauf das nun bewegliche Gerät von der Federung 21 gegen die Oberfläche gedrückt wird und sich hierbei selbsttätig senkrecht zu der Oberfläche ausrichtet. Nach Messung des Farbtons wird die Saugluft der Saugfüße 18 in Blasluft umgeschaltet, die Greifeinrichtung 20 wieder geschlossen und die Aufnahmeeinrichtung 15 abgehoben. Die Steuerung dieser Vorgänge erfolgt durch externe Signale von der zentralen Steuerung.

In der in der Zeichnung rechten Aufnahmeeinrichtung 16 ist als weiteres Meßgerät ein Glanzmeßgerät 26 angeordnet. Wie bei der Aufnahmeeinrichtung 14 können eine sphärische federnde Lagerung 13 und zur Ausrichtung drei Abstandssensoren 12' vorhanden sein, doch könnte auch eine andere, z. B. derjenigen für das Meßgerät 25 ähnliche Aufnahmekonstruktion vorgesehen sein. An der Aufnahmeeinrichtung 16 ist zusätzlich zu dem Meßgerät 26 ein Schichtdickenmeßgerät 27 montiert, das zum Messen der Schichtdicke der Oberfläche auf diese aufgesetzt wird. Hierbei kann gleichzeitig mit der Messung der Schichtdicke die Glanzmessung durch das Meßgerät 26 durchgeführt werden. Je nach den gegebenen Erfordernissen ist es aber auch möglich, an einzelnen Meßpunkten der Karosse nur die Schichtdicke oder nur den Lackglanz zu messen. Zumindest die Glanzmessung kann unter Steuerung durch die Sensoren 12' auch berührungslos durchgeführt werden.

Auch die Meßgeräte 24 und 25 kommen je nach Bedarf zum Einsatz, d.h. an einigen Meßpunkten können die verschiedenen Messungen nacheinander unter entsprechender Positionierung des betreffenden Meßgerätes durch den Roboter durchgeführt werden, während an anderen Meßpunkten nur ein Qualitätsparameter oder wenigstens nicht alle meßbaren Parameter gemessen werden.

Bei den vier von dem Roboterarm 1 positionierbaren Meßgeräten handelt es sich um an sich bekannte und im Handel erhältliche, bisher aber ausschließlich manuell verwendete Geräte, die im erforderlichen Maß für die beschriebenen Zwecke modifiziert wurden. Sie sind vorzugsweise so in eine gehäuseartige Aufnahmeeinrichtung eingesetzt, daß sie schnell und einfach auswechselbar sind.

Zu der Modifizierung der Meßgeräte und zur Anpassung an die gewünschte Automatisierung gehören im beschriebenen Fall vier serielle Schnittstellen für die Datenkommunikation zwischen dem Steuerrechner (PC) des Systems und den vier Meßgeräten. Ferner enthält der Steuerrechner eine digitale E/A-Karte für die Kommunikation mit dem Roboter.

Im Betrieb wird der Roboter von einem dem Typ der zu messenden Karosse und der zu messen Farbe entsprechenden Programm gesteuert, wobei er eine Vielzahl von im Programm hinterlegten Meßpunkten der Karosse anfährt. Nach dem Anfahren des ersteren Meßpunktes sendet der Roboter ein Freigabesignal an den PC, worauf über die serielle Schnittstelle an das entsprechende Meßgerät ein Meßfreigabesignal gegeben wird. Der Roboter bleibt in der Meßposition solange kein Signal vom PC kommt. Nach Abschluß der Messung wird über die erwähnte E/A-Karte ein Eingang in der Robotersteuerung gesetzt, worauf der Roboter die nächste Meßposition anfahren kann. Während dies geschieht, werden die Meßergebnisse, soweit es sich z. B. um Schichtstärken- und Farbtonmessung handelt, über die serielle Schnittstelle in den PC übertragen und dort gespeichert. Da das Verlaufmeßgerät eine Auswertungszeit von etwa 2 bis 3 sec. benötigt und in der Lage ist, bis zu 99 Messungen abzuspeichern, wird in diesem Fall erst nach Vermessen der gesamten Karosse die Information über die Beendigung der Messung an den PC gesendet und dort das Meßergebnis gespeichert.

Auch zur Beurteilung des Meßergebnisses soll dem Anwender ein möglichst weitgehend automatisches System zur Verfügung stehen. Hierfür ist es insbesondere zweckmäßig, für jeden gemessenen Punkt auf der Karosse die Meßwerte mit einem Bilddarstellgerät graphisch darzustellen, z. B. auf dem Bildschirm des Steuerrechners. Auf dem Bildschirm wird vorzugsweise die gesamte Karosse (oder ein besonders interessierender Teil) dargestellt und an jeder Meßstelle das jeweilige Meßergebnis selbsttätig durch Markierungen mit unterschiedlichen, die jeweilige Beschichtungsqualität angebenden Farben dargestellt.

## Patentansprüche

1. Meßsystem zur Beurteilung der Oberflächenqualität, nämlich der Rauhigkeit, von serienweise automatisch beschichteten Werkstücken, insbesondere Kraftfahrzeugkarossen, mit einem Verlaufmeßgerät (24), das zur Messung des Schichtverlaufs der Oberfläche längs einer vorbestimmten Meßstrecke in einem gegebenen, insbesondere gleichbleibenden, Abstand über die Oberfläche bewegbar ist, wobei Wegsignale erzeugt werden, die der von dem Meßgerät (24) relativ zu dem Werkstück zurückgelegten Wegstrecke entsprechen, und wobei nach Erreichen der vorbestimmten Meßstrecke das Meßergebnis auswertbar ist,
**dadurch gekennzeichnet,**
**dass** das Verlaufmeßgerät (24) an einem mehrachsigen Bewegungsautomaten (1) montiert und von diesem berührungslos über die beschichtete Oberfläche bewegbar ist,
und **dass** die Wegsignale entsprechend der von dem Bewegungsautomaten (1) ausgeführten Bewegung erzeugt werden, indem die Wegsignale aus den von der Steuerung des Bewegungsautomaten (1) erzeugten Signalen abgeleitet werden.

2. Meßsystem nach Anspruch 1, **dadurch gekennzeichnet, dass** die Wegsignale von einem Prozessor erzeugt werden, der ein von der Steuereinrichtung des Bewegungsautomaten (1) erzeugtes geschwindigkeitsproportionales Signal in ein Impulsgebersignal umwandelt, das einem Eingang des Verlaufmeßgerätes (24) zugeführt wird.

3. Meßsystem nach Anspruch 1 oder 2, **gekennzeichnet durch** eine Programmsteueranordnung, die den Bewegungsautomaten (1) veranlaßt, das Verlaufmeßgerät (24) der Reihe nach an einer Vielzahl ausgewählter Oberflächenstellen des Werkstücks jeweils über die vorbestimmte Meßstrecke zu bewegen.

4. Meßsystem nach einem der vorangehenden Ansprüche **dadurch gekennzeichnet, dass** das Verlaufmeßgerätes (24) in einer an dem bewegbaren Arm des Bewegungsautomaten (1) vorgesehenen Aufnahmeeinrichtung (14) gehaltert ist und an der Aufnahmeeinrichtung (14) mindestens drei Abstandssensoren (12) angeordnet sind, die bei Annäherung des Verlaufmeßgerätes (24) an die beschichtete Oberfläche den jeweiligen Abstand von der Oberfläche messen, und dass eine Rechen- und Steuereinrichtung vorgesehen ist, die aufgrund der gemessenen Abstandswerte Steuersignale erzeugt, mit denen eine gegebene Achse (10) des Meßgerätes (24) in die vorbestimmte Winkelstellung in Bezug auf die beschichtete Oberfläche gestellt wird.

5. Meßsystem nach Anspruch 4 **dadurch gekennzeichnet, dass** ein Regelkreis vorhanden ist, der aufgrund der von den Abstandssensoren (12) gemessenen Abstandswerte den Abstand des Verlaufmeßgerätes (24) von der beschichteten Oberfläche während der Bewegung des Meßgerätes (24) parallel zu der Oberfläche konstant hält.

6. Meßsystem einem der vorangehenden Ansprüche, **dadurch gekennzeichnet, dass** ein Auswertungssystem mit einem Bilddarstellgerät vorgesehen ist und die Meßergebnisse für jede gewählte Meßstelle der Werkstückoberfläche graphisch darstellbar sind.

7. Meßsystem nach Anspruch 6, **dadurch gekennzeichnet, dass** das Werkstück von dem Darstellgerät bildlich darstellbar ist und an jeder Meßstelle das jeweilige Meßergebnis selbsttätig durch Markierungen mit unterschiedlichen entsprechend der jeweiligen Beschichtungsqualität gewählten Farben darstellbar ist.

8. Meßsystem nach einem der vorangehenden Ansprüche, **dadurch gekennzeichnet, dass** an dem Bewegungsautomaten (1) weitere Meßgeräte (25, 26, 27) zum Messen des Farbtons, des Lackglanzes und/oder Schichtdicke der beschichteten Oberfläche montiert oder montierbar sind.

9. Meßsystem nach Anspruch 8 **dadurch gekennzeichnet, dass** ein Steuerrechner vorgesehen ist, der je eine Schnittstelle zur Verbindung und Kommunikation mit dem jeweiligen Meßgerät (24, 25, 26, 27) sowie eine Eingabe/Ausgabe-Steuereinheit zur Verbindung und Kommunikation mit dem Bewegungsautomaten (1) aufweist.

10. Meßsystem nach einem der Ansprüche 8 oder 9 **dadurch gekennzeichnet, dass** das Verlaufsmeßgerät (24) und die weiteren Meßgeräte (25, 26, 27) an einem bewegbaren Arm des Bewegungsautomaten (1) montiert sind.

11. Meßsystem nach einem der Ansprüche 8 bis 10 **dadurch gekennzeichnet, dass** an dem Bewegungsautomaten mehrere Aufnahmeeinrichtungen (14, 15, 16) zur Halterung der unterschiedlichen Meßgeräte (24, 25, 26, 27) vorgesehen sind, die von dem Bewegungsautomaten (1) wahlweise in ihre jeweiligen vorbestimmten Meßpositionen an der beschichteten Oberfläche bringbar sind.

12. Meßsystem nach Anspruch 11 **dadurch gekennzeichnet, dass** die Meßgeräte (24, 25, 26, 27) in oder an ihren Aufnahmeeinrichtungen (14, 15, 16) auswechselbar gehaltert sind.

13. Meßsystem nach einem der Ansprüche 11 oder 12 **dadurch gekennzeichnet, dass** mindestens eine Aufnahmeeinrichtung (14, 16) zum Schutz gegen Beschädigungen der beschichteten Oberfläche sphärisch federnd gelagert ist.

14. Meßsystem nach einem der Ansprüche 11 bis 13 **dadurch gekennzeichnet, dass** ein erstes weiteres Meßgerät (25) als berührend auf die beschichtete Oberfläche aufsetzbares Meßgerät (25) in einer an dem bewegbaren Arm (1) des Bewegungsautomaten (1) versehenen ersten weiteren Aufnahmeeinrichtung (15) angeordnet ist, die mit Vakuumsaugfüßen (18) zum zeitweiligen Befestigen der Aufnahmeeinrichtung (15) auf der beschichteten Oberfläche versehen ist, und dass die erste weitere Aufnahmeeinrichtung (15) eine gesteuerte Greifeinrichtung (20) enthält, welche das erste weitere Meßgerät (25) festhält, wenn die erste weitere Aufnahmeeinrichtung (15) von der beschichteten Oberfläche entfernt ist, und welche zum Aufsetzen des von einer Federung (21) angedrückten ersten weiteren Meßgerätes (25) auf die Oberfläche geöffnet wird.

15. Meßsystem nach Anspruch 14 **dadurch gekennzeichnet, dass** an der ersten weiteren Aufnahmeeinrichtung (15) ein Abstandssensor (19) angeordnet ist, der bei Annäherung an die beschichtete Oberfläche ein Signal erzeugt, durch das die Annäherungsbewegung des Bewegungsautomaten (1) von schnell auf langsam umgeschaltet wird.

16. Meßsystem nach einem der Ansprüche 11 bis 15 **dadurch gekennzeichnet, dass** an einer ein zweites weiteres Meßgerät (26) enthaltenden Aufnahmeeinrichtung (16) ein drittes weiteres Meßgerät (27) zum Messen eines anderen Qualitätsparameters angeordnet ist.

17. Meßsystem nach Anspruch 16, **dadurch gekennzeichnet, dass** das zweite weitere Meßgerät (26) den Lackglanz und das dritte weitere Meßgerät (27) die Schichtdicke mißt.

## Claims

1. A measuring system for judging the surface quality, namely the roughness, of automatically serially coated workpieces, particularly vehicle bodies, including a shape measuring device (24) which is movable, for the purpose of measuring the shape of the coating on the surface, along a predetermined measuring section at a predetermined, particularly constant, distance above the surface, whereby distance signals are produced, which correspond to the distance covered by the measuring device (24) relative to the workpiece and whereby, after reaching the predetermined measuring section, the measuring result may be analysed, **characterised in that** the shape measuring device (24) is mounted on a multi-axis movement machine (1) and is movable by it contactlessly over the coated surface, and that the distance signals are produced in correspondence with the movement performed by the movement machine (1) by deriving the distance signals from the signals produced by the controller of the movement machine (1).

2. A measuring system as claimed in Claim 1, **characterised in that** the distance signals are produced by a processor, which converts a signal, which is proportional to speed, produced by the control device of the movement machine (1) into a pulse transmitter signal, which is supplied to an input of the shape measuring device (24).

3. A measuring system as claimed in Claim 1 or 2, **characterised by** a program control device, which causes the movement machine (1) to move the shape measuring device sequentially to a plurality of selected surface positions on the workpiece, in each case above the predetermined measuring section.

4. A measuring system as claimed in one of the preceding claims, **characterised in that** the shape measuring device (24) is mounted in a mounting (14) provided on the movable arm of the movement machine (1) and at least three distance sensors (12) are arranged on the mounting (4) which, when the shape measuring device (24) approaches the coated surface, measure the current distance from the surface, and that a calculating and control device is provided, which produces control signals on the basis of the measured distance values, with which a predetermined axis (10) of the measuring device (24) is moved into the predetermined angular position with respect to the coated surface.

5. A measuring system as claimed in Claim 4, **characterised in that** a control circuit is present which, on the basis of the distance values measured by the distance sensors (12), maintains the distance of the shape measuring device (24) from the coated surface constant during the movement of the measuring device (24) parallel to the surface.

6. A measuring system as claimed in one of the preceding claims, **characterised in that** an evaluation system with an image display device is provided and the measurement results may be displayed for each selected measuring point on the workpiece surface.

7. A measuring system as claimed in Claim 6, **characterised in that** the workpiece may be pictorially displayed by the display device and the respective measurement result at each measuring point may be displayed automatically by markings with different colours selected in accordance with the respective coating quality.

8. A measuring system as claimed in one of the preceding claims, **characterised in that** mounted or mountable on the movement machine (1) there are further measuring devices (25, 26, 27) for measuring the hue, the paint gloss and/or coating thickness of the coated surface.

9. A measuring system as claimed in Claim 8, **characterised in that** a control computer is provided which includes a respective interface for connecting and communication with each measuring device (24, 25, 26, 27) and an input/output control unit for connecting and communication with the movement machine (1).

10. A measuring system as claimed in one of Claims 8 or 9, **characterised in that** the shape measuring device (24) and the further measuring devices (25, 26, 27) are mounted on a movable arm of the movement machine (1).

11. A measuring system as claimed in one of Claims 8 to 10, **characterised in that** a plurality of mountings (14, 15, 16) for holding the different measuring devices (24, 25, 26, 27) are provided on the movement machine, which are selectively movable by the movement machine (1) into their respective predetermined measuring positions on the coated surface.

12. A measuring system as claimed in Claim 11, **characterised in that** the measuring devices (24, 25, 26, 27) are replaceably held in or on their mountings (14, 15, 16).

13. A measuring system as claimed in one of Claims 11 or 12, **characterised in that** at least one mounting (14, 16) is spherically resiliently mounted for protection against damage to the coated surface.

14. A measuring system as claimed in one of Claims 11 to 13, **characterised in that** a first further measuring device (25), in the form of a measuring device (25), which may be positioned in contact with the coated surface is arranged, in a first further mounting (15) provided on the movable arm (1) of the movement machine (1), which mounting is provided with vacuum suction feet (18) for temporarily attaching the mounting (15) to the coated surface, and that the first further mounting (15) includes a controlled gripping device (20), which secures the first further measuring device (25), when the first further mounting (15) is remote from the coated surface, and which is opened to place the first further measuring device (25), which is acted on by a spring (21), on the surface.

15. A measuring system as claimed in Claim 14, **characterised in that** arranged on the first further mounting (15) there is a distance sensor (19), which, when it approaches the coated surface, produces a signal, by means of which the approaching movement of the movement machine (1) is switched over from fast to slow.

16. A measuring system as claimed in one of Claims 11 to 15, **characterised in that** arranged on a second mounting (16) holding a second further measuring device (26) there is a third further measuring device (27) for measuring another quality parameter.

17. A measuring system as claimed in Claim 16, **characterised in that** the second further measuring device (26) measures the paint gloss and the third further measuring device (27) measures the coating thickness.

## Revendications

1. Système de mesure pour apprécier la qualité de surfaces, à savoir la rugosité, de pièces pourvues automatiquement en série d'un revêtement, en particulier de carrosseries de véhicules automobiles, comportant un appareil de mesure d'allure (24) qui, pour mesurer l'allure de la couche de la surface le long d'un parcours prédéterminé, est déplaçable au-dessus de la surface à une distance donnée, en particulier constante, des signaux de distance étant produits qui correspondent à la distance parcourue par l'appareil de mesure (24) par rapport à la pièce, et le résultat de la mesure étant exploitable lorsqu'est atteint le parcours de mesure prédéterminé ; **caractérisé en ce que** l'appareil de mesure d'allure (24) est monté sur un automate de déplacement (1) à plusieurs axes et est déplaçable par celui-ci sans contact au-dessus de la surface recouverte, et **en ce que** les signaux de distance sont produits en fonction du mouvement exécuté par l'automate de déplacement (1), **en ce que** les signaux de distance sont dérivés des signaux produits par la commande de l'automate de déplacement (1).

2. Système de mesure selon la revendication 1, **caractérisé en ce que** les signaux de distance sont produits par un processeur qui convertit un signal proportionnel à la vitesse, produit par le dispositif de commande de l'automate de déplacement (1), en un signal de générateur d'impulsions qui est envoyé à une entrée de l'appareil de mesure d'allure (24).

3. Système de mesure selon la revendication 1 ou 2, **caractérisé par** un dispositif de commande de programme qui fait que l'automate de déplacement (1) provoque le déplacement de l'appareil de mesure d'allure (24), dans l'ordre, en un grand nombre de points choisis de la surface de la pièce, dans chaque cas sur le parcours de mesure prédéterminé.

4. Système de mesure selon l'une des revendications précédentes, **caractérisé en ce que** l'appareil de mesure d'allure (24) est maintenu dans un dispositif de réception (14) prévu sur le bras déplaçable de l'automate de déplacement (1), et sur le dispositif de réception (14) sont disposés au moins trois capteurs de distance (12) qui, à l'approche de l'appareil de mesure d'allure (24) de la surface recouverte, mesurent la distance respective par rapport à la surface, et **en ce qu'**il est prévu un dispositif de calcul et de commande qui, à partir des valeurs de distance mesurées, produit des signaux de commande au moyen desquels un axe (10) donné de l'appareil de mesure (24) est placé dans la position angulaire prédéterminée par rapport à la surface recouverte.

5. Système de mesure selon la revendication 4, **caractérisé en ce qu'**il est prévu un circuit de régulation qui, à partir des valeurs de distance mesurées par les capteurs de distance (12), maintient constante la distance entre l'appareil de mesure d'allure (24) et la surface recouverte, pendant le déplacement de l'appareil de mesure (24) parallèlement à la surface.

6. Système de mesure selon l'une des revendications précédentes, **caractérisé en ce qu'**il est prévu un système d'exploitation avec un appareil de représentation d'image, et les résultats de la mesure pour chaque point de mesure choisi de la surface de la pièce peuvent être représentés graphiquement.

7. Système de mesure selon la revendication 6, **caractérisé en ce que** la pièce peut être représentée graphiquement par l'appareil de représentation et en chaque point de mesure le résultat correspondant de la mesure peut être représenté automatiquement par des marquages avec des couleurs différentes choisies en fonction de la qualité respective du revêtement.

8. Système de mesure selon l'une des revendications précédentes, **caractérisé en ce que** sur l'automate de déplacement (1) sont montés ou peuvent être montés d'autres appareils de mesure (25, 26, 27) pour la mesure de la couleur, du brillant de la laque et/ou de l'épaisseur de la couche de la surface recouverte.

9. Système de mesure selon la revendication 8, **caractérisé en ce qu'**il est prévu un ordinateur de commande qui comporte une interface pour la liaison et la communication avec l'appareil de mesure (24, 25, 26, 27) respectif ainsi qu'une unité de commande d'entrée/sortie pour la liaison et la communication avec l'automate de déplacement (1).

10. Système de mesure selon l'une des revendications 8 ou 9, **caractérisé en ce que** l'appareil de mesure d'allure (24) et les autres appareils de mesure (25, 26, 27) sont montés sur un bras déplaçable de l'automate de déplacement (1).

11. Système de mesure selon l'une des revendications 8 à 10, **caractérisé en ce que** sur l'automate de déplacement sont prévus plusieurs dispositifs de réception (14, 15, 16) pour la fixation des différents appareils de mesure (24, 25, 26, 27) qui peuvent être amenés par l'automate de déplacement (1) au choix dans leurs positions de mesure prédéterminées respectives sur la surface recouverte.

12. Système selon la revendication 11, **caractérisé en ce que** les appareils de mesure (24, 25, 26, 27) sont maintenus de manière échangeable dans ou sur leurs dispositifs de réception (14, 15, 16).

13. Système de mesure selon l'une des revendications 11 ou 12, **caractérisé en ce qu'**au moins un dispositif de réception (14, 16) est monté de manière élastique sphériquement pour la protection contre les endommagements de la surface recouverte.

14. Système de mesure selon l'une des revendications 11 à 13, **caractérisé en ce qu'**un premier autre dispositif de mesure (25), en tant qu'appareil de mesure (25) à placer en contact sur la surface recouverte, est disposé dans un premier autre dispositif de réception (15) prévu sur le bras déplaçable (1) de l'automate de déplacement (1), lequel dispositif de réception est pourvu de pieds d'aspiration sous vide (18) pour la fixation temporaire du dispositif de réception (15) sur la surface recouverte, et **en ce que** le premier autre dispositif de réception (15) contient un dispositif de saisie (20) commandé qui fixe le premier autre dispositif de commande (25) lorsque le premier autre dispositif de réception (15) est éloigné de la surface recouverte, et qui est ouvert pour placer sur la surface le premier autre appareil de mesure (25) pressé par un système à ressort (21).

15. Système de mesure selon la revendication 14, **caractérisé en ce que** sur le premier autre dispositif de réception (15) est disposé un capteur de distance (19) qui, à l'approche de la surface recouverte, produit un signal par lequel le mouvement d'approche de l'automate de déplacement (1) est commuté de rapide à lent.

16. Système de mesure selon l'une des revendications 11 à 15, **caractérisé en ce que** sur un dispositif de réception (16), contenant un deuxième autre dispositif de mesure (26), est disposé un troisième autre appareil de mesure (27) pour mesurer un autre paramètre de qualité.

17. Système de mesure selon la revendication 16, **caractérisé en ce que** le deuxième autre appareil de mesure (26) mesure la brillance de la laque et le troisième autre appareil de mesure (27) mesure l'épaisseur de la couche.
